# NEUE EUROPÄISCHE PATENTSCHRIFT

(11) **EP 0 691 501 B2**
(45) Veröffentlichungstag und Bekanntmachung des Hinweises auf die Entscheidung über den Einspruch: **24.03.2004**
(45) Hinweis auf die Patenterteilung: 04.11.1998
(21) Anmeldenummer: 95108951.5
(22) Anmeldetag: 10.06.1995
(51) Int. Cl.: F16L 37/084

(54) **Steckverbinder für Schlauch- und/oder Rohrleitungen**
Plug-in connector for hoses and/or pipe conduits
Raccord à fiche pour tuyaux flexibles et/ou tuyaux rigides

(30) Priorität: 08.07.1994 DE 9411111 U
(43) Veröffentlichungstag der Anmeldung: 10.01.1996
(73) Patentinhaber: Voss Automotive GmbH, 51688 Wipperfürth (DE)
(72) Erfinder: Geiger, Karl-Otto, D-51688 Wipperfürth (DE); Schultes, Karl-Heinz, Dr. Ing., D-50677 Köln (DE)
(74) Vertreter: Patentanwälte Dr. Solf & Zapf

(56) Entgegenhaltungen:
- EP-A- 0 530 485
- WO-A-87/04767
- DE-A- 4 214 105
- DE-C- 3 843 995
- US-A- 2 772 898
- US-A- 4 610 468
- NORMA-JET, Fa.Rasmussen GmbH, August 1991
- Gähwiler, U. et al., "Schnellanschluss für Kraftstoffsysteme" in "Kunststoffe", Carl Hanser Verlag, München, 82. Jahrgang 1992/1

## Beschreibung

Die vorliegende Erfindung betrifft einen Steckverbinder für Schlauch- und/oder Rohrleitungen, bestehend aus einem Stekkerteil mit einem in eine Stecköffnung eines Aufnahmeteils einsteckbaren und über Verriegelungsmittel lösbar arretierbaren Steckerschaft, wobei das Steckerfeil als Verriegelungsmittel mindestens zwei federelastische Rastarme aufweist, die sich parallel zur Steckachse jeweils mit Abstand zum Steckerschaft in Richtung dessen freien Endes erstrecken und im eingesteckten Zustand mit Rastnocken eine Raststufe des Aufnahmeteils arretierend hintergreifen, wobei die Rastarme zum Lösen des Steckerteils mittels eines Löseelementes spreizbar sind, welches in Richtung der Steckachse verschiebbar gehaltert ist und mit den Rastarmen derart zusammenwirkt, daß die Rastarme durch ein Verschieben des Löselementes in Herausziehrichtung des Steckerteils gespreizt werden.

Ein ähnlicher, insbesondere für Kraftstoffleitungen von Verbrennungsmotoren geeigneter Steckverbinder, bei dem das Löseelement beweglich am Steckerteil angeordnet ist, ist aus der DE 42 14 105 Al bekannt. Bei diesem Steckverbinder ist das Löseelement jedoch nicht in Richtung der Steckachse verschiebbar gehaltert. Der Steckverbinder hat sich in der Praxis bereits recht gut bewährt, weil der Steckvorgang und das Verriegeln bzw. das Sichern der Verbindung sehr einfach und in einem Vorgang erfolgen kann. Dabei ist auch ein Lösen der Verbindung möglich, wozu das Löseelement als U-förmige Spreizklammer ausgebildet ist, die im Bereich eines zwischen den Rastarmen und dem Steckerschaft gebildeten Spaltes senkrecht zur Steckachse (Längsachse des Steckerschaftes) verschiebbar geführt ist, so daß über Schrägflächen ein Spreizen der Rastarme möglich ist. Dabei ist allerdings nachteilig, daß die bügelartige Spreizklammer seitlich recht weit über die Außenkontur des Steckerteils hinausragt, so daß sie im praktischen Einsatz des Steckverbinders beschädigt oder gar abgebrochen oder womöglich ungewollt betätigt werden könnte, was dann aber ein ungewolltes Lösen der Steckverbindung und damit auch nachteilige Undichtigkeiten zur Folge hätte. Außerdem ist das Betätigen zum gewollten Lösen der Verbindung insofern etwas schwierig, als hierzu Bewegungen in zwei verschiedenen Richtungen erforderlich sind, denn erstens muß die Spreizklammer quer zur Steckachse verschoben und dann zweitens das Steckerteil in Richtung der Steckachse-herausgezogen werden.

Ein Steckverbinder der eingangs beschriebenen Art ist aus der US-A-2 772 898 bekannt. Bei dieser bekannten Steckkupplung ist ein in axialer Richtung verschiebbares Löseelement vorgesehen, welches Schrägflächen aufweist, über die bei einem Verschieben des Löseelementes in Herausziehrichtung des Stecker-Kupplungsteils die Rastarme gespreizt werden. Die axiale Verschiebung des Löseelementes wird dabei nicht unmittelbar manuell, sondern durch eine Verdrehung mittels eines hebelartigen, radial abstehenden Klammerelementes bewirkt, wobei über eine Nokkenanordnung die Axialverschiebung bewirkt wird. Aufgrund des hebelartigen, radial abstehenden Klammerelementes sowie auch dadurch, daß das Löseelement den gesamten Bereich der Rastarme umfangsgemäß umschließt, besitzt die bekannte Steckkupplung recht große Baumaße, so daß sie nur für solche Anwendungsfälle geeignet ist, wo ausreichender Einbauraum zur Verfügung steht, um vor allem den zum Lösen erforderlichen Bewegungsspielraum zum Verdrehen und zum daraus resultierenden Verschieben des Klammerelementeszu gewährleisten. Außerdem kann es je nach Einbausituation über das radiale Hebelelement zu einem ungewollten Lösen der Kupplungsverbindung kommen.

Der vorliegenden Erfindung liegt die Aufgabe zugrunde, ausgehend von dem Stand der Technik einen Steckverbinder mit kompakter Bauform zu schaffen, der bei hoher Sicherheit gegen Störungen, Ausfälle und ungewolltes Lösen im Falle eines gewollten Lösevorgangs einfach und komfortabel zu betätigen ist.

Erfindungsgemäß wird dies durch die Merkmale des Anspruchs 1 erreicht.

Durch diese vorteilhafte Ausgestaltung kann das Löseelement einerseits so an die Außenkontur des Steckerteils angepaßt oder sogar "in die Außenkontur integriert" sein, daß es sich eng anschmiegt; es stehen dadurch folglich keine Teile mehr weit vom Steckerteil ab, was vorteilhafterweise zu einer hohen Sicherheit gegen Beschädigungen und ungewolltes Betätigen führt. Andererseits deckt das Schutzringelement den Bereich der Rastnocken seitlich ab, so daß die Bereiche der Rastnocken optimal gegen Eindringen von Fremdkörpern von der Seite her, d.h. in Querrichtung zur Steckachse, und somit auch gegen dadurch bedingtes ungewolltes Lösen geschützt sind. Außerdem ist das Betätigen zum Lösen des Steckers sehr einfach und komfortabel, weil die hierfür vorgesehene Verschieberichtung des Löseelementes und die Ausziehrichtung des Stekkerteils übereinstimmen. Das Steckerteil wird zum Lösen im Bereich des Löseelementes ergriffen, und durch Zug mit einer Entriegelungskraft arfolgt zunächst die Entriegelung durch Verschieben des Löseelementes und dadurch bedingtes Spreizen der Rastarme. Durch einen weitergehenden Zug mit einer gleichgerichteten Entnahmekraft wird dann das Steckerteil vom Auinahmeteil gelöst, d.h. der Steckerschaft wird aus der Stecköffnung herausgezogen, denn das erfindungsgemäße Löseelement gelangt vorzugsweise in einer bestimmten Verschiebestellung an einen Endanschlag, so daß die auf das Löseelement ausgeübte Entnahmekraft auf das gesamte Steckerteil übertragen wird.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll im folgenden die Erfindung näher erläutert werden. Dabei zeigen:
- Fig. 1: eine teilgeschnittene Seitenansicht eines Stekkerteils des erfindungsgemäßen Steckverbinders,
- Fig. 2: eine vergrößerte Darstellung des Bereichs II gemäß Fig. 1, wobei zusätzlich das Aufnahmeteil bereichsweise angedeutet ist,
- Fig. 3: eine Ansicht des Steckerteils in Pfeilrichtung III gemäß Fig. 1 und
- Fig. 4: eine Seitenansicht in Pfeilrichtung IV gemäß Fig. 3.

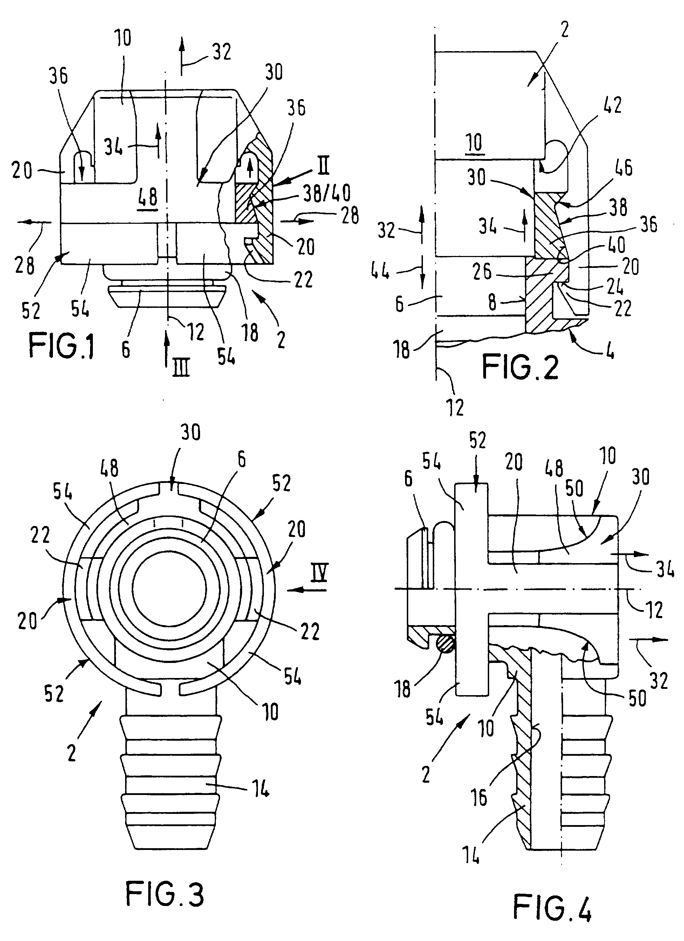

Gemäß Fig. 1 und 2 besteht ein erfindungsgemäßer Steckverbinder aus einem Steckerteil 2 und einem Aufnahmeteil 4 (nur in Fig. 2 angedeutet), wobei das Stekkerteil 2 einen Steckerschaft 6 zum Einstecken in eine Stecköffnung 8 des Aufnahmeteils 4 aufweist. Das Aufnahmeteil 4 ist in der Regel ein ortsfestes Anschlußteil, insbesondere eine Einspritzdüse eines Kraftfahrzeugmotors. Das Steckerteil 2 dient nun zum Anschluß einer nicht dargestellten Schlauchleitung an das Aufnahmeteil 4. Hierzu besteht das Steckerteil 2 aus einem Gehäuseabschnitt 10, an den sich einseitig der Steckerschaft 6 sowie anderseitig und vorzugsweise in einem rechten Winkel zur Steckachse 12 (Längsmittelachse des Steckerschaftes 6) ein Anschlußdorn 14 zum Aufschieben der Schlauchleitung anschließt (s. Fig. 3 und 4). Durch den Anschlußdorn 14, den Gehäuseabschnitt 10 und den Steckerschaft 6 verläuft ein innerer durchgehender Kanal 16 (Fig. 4), der seine Eintrittsöffnung am freien Ende des Anschlußdorns 14 und seine Austrittsöffnung am freien Ende des Steckerschaftes 6 besitzt. Auf dem Steckerschaft 6 ist in einer Ringnut eine Ringdichtung 18 angeordnet.

Zum Verriegeln des Steckerteils 2 mit dem Aufnahmeteil 4 im eingesteckten Zustand des Steckerschaftes 6 weist das Steckerteil 2 als Verriegelungsmittel vorzugsweise zwei einander diametral gegenüberliegende, federelastische Rastarme 20 auf, die sich parallel zur Steckachse 12 jeweils mit radialem Abstand zum Steckerschaft 6 in Richtung auf dessen freies Ende hin erstrecken. Jeder der Rastarme 20 weist an seinem freien Ende einen radial nach innen weisenden Rastnokken 22 auf. Im eingesteckten Zustand - siehe Fig. 2 - hintergreifen die Rastarme 20 mit den Rastnocken 22 eine Raststufe 24 des Aufnahmeteils 4 arretierend, wobei die Raststufe 24 bevorzugt von einem umlaufenden, sich radial nach außen erstreckenden Ringsteg 26 des Aufnahmeteils 4 gebildet ist. Hierbei weisen die Rastnocken 22 derartige Schrägflächen auf, daß beim Einstecken des Steckerschaftes 6 in die Stecköffnung 8 durch Anlage am Ringsteg 26 des Aufnahmeteils 4 die Rastarme 20 selbsttätig radial nach außen gespreizt werden (siehe die in Fig.1 eingezeichneten Pfeile 28), bis die Rastnocken 22 hinter die Stufenfläche 24 einschnappen. Das Steckerteil 2 kann nachfolgend auch wieder gelöst, d.h. herausgezogen werden, wozu die Rastarme 20 mittels eines am Steckerteil 2 beweglich angeordneten Löseelementes 30 in Pfeilrichtung 28 spreizbar sind.

Insoweit entspricht der erfindungsgemäße Steckverbinder der eingangs erwähnten DE 42 14 105 A1, auf die hinsichtlich weiterer Einzelheiten an dieser Stelle in vollem Umfange Bezug genommen wird.

Das Löseelement 30 ist so an dem Steckerteil 2 gehaltert, daß es axial, d.h. in Richtung der Steckachse 12, verschiebbar ist. Hierbei wirkt das Löseelement 30 erfindungsgemäß derart mit den Rastarmen 20 zusammen, daß die Rastarme 20 dann zum Lösen der Verriegelung radial nach außen in Pfeilrichtung 28 gespreizt werden, wenn das Löseelement 30 in Herausziehrichtung (Pfeile 32) des Steckerteils 2 verschoben wird. Diese Verschiebung des Löseelementes 30 ist durch Pfeile 34 veranschaulicht. Das Löseelement 30 greift hierzu jeweils mit einem Betätigungsabschnitt 36 (s. Fig. 1 und 2) zwischen den Steckerschaft 6 und jeden der Rastarme 20 ein, wobei jeder Betätigungsabschnitt 36 über Schrägflächen 38, 40 mit dem zugehörigen Rastarm 20 zusammenwirkt. Wie sich insbesondere aus Fig. 2 ergibt, ist vorzugsweise vorgesehen, daß jeder Betätigungsabschnitt 36 eine in radialer Richtung äußere Schrägfläche 38 aufweist, die in Löserichtung (Pfeile 32, 34) schräg nach innen in Richtung der Steckachse 12 verläuft, wobei dann jeder Rastarm 20 eine radial nach innen weisende, innere Schrägfläche 40 aufweist, die entsprechend schräg verläuft, nämlich ebenfalls in Löserichtung (Pfeile 32, 34) schräg nach innen in Richtung der Steckachse 12.

Vorteilhafterweise wird das Löseelement 30 in Steckerteil-Löserichtung (Pfeile 32) durch einen Endanschlag in seiner Axialbewegung in Pfeilrichtung 34 begrenzt. Dieser Endanschlag wird vorzugsweise durch eine (Ring-)Stufe 42 des Steckerteils 2 gebildet (s. Fig. 2). Zudem ist es vorteilhaft, wenn das Löseelement 30 auch in Steckerteil-Einsteckrichtung (Pfeil 44 in Fig. 2) durch einen Endanschlag in seiner Axialbewegung begrenzt wird, und zwar in einer Stellung, in der die Rastarme 20 in ihrer in Fig. 2 dargestellten Verriegelungsstellung stehen. Dieser Endanschlag wird vorzugsweise von einem Nocken 46 am Rastarm 20 gebildet, wobei dieser Nocken 46 eine sich schräg nach außen erstrekkende Schrägfläche und der Betätigungsabschnitt 36 eine entsprechende Schrägfläche aufweisen. Zusätzlich oder aber alternativ hierzu kann es vorteilhaft sein, wenn in der in Fig. 2 veranschaulichten Kupplungslage das Löseelement 30 an dem Aufnahmeteil 4 zur Anlage kommt.

In der dargestellten, bevorzugten Ausführungsform der Erfindung ist das Löseelement 30 als federelastisches, klammerartiges, lösbar auf dem Steckerteil 2 aufgerastetes Clipelement 48 ausgebildet.Dieses Clipelement 48 umschließt das Steckerteil 2 etwa ringförmig, ist dabei aber einseitig zum Aufclipsen offen ausgebildet (s. insbesondere Fig. 3). Hierdurch ist das Clipelement 48 nach Art eines Seeger-Ringes von der Seite her, d.h. quer zur Steckachse 12, auf das Steckerteil 2 bzw. den Gehäuseabschnitt 10 aufzuschieben und aufzurasten. Bei diesem Aufrasten werden dann die Betätigungsabschnitte 36 zwischen den Steckerschaft 6 und die Rastarme 20 eingeführt. Durch diese vorteilhafte Ausgestaltung wird eine optimale Anpassung des Löseelementes 30 an die Außenkontur des Steckerteils 2 erreicht.

Hierbei ist es zudem vorteilhaft, wenn das Löseelement 30 außenseitige Griffmulden 50 aufweist (nur in Fig. 4 erkennbar), wodurch das Löseelement 30 gut mit dem Daumen und einem Finger ergreifbar ist.

Da das Steckerteil 2 in der bevorzugten Ausführungsform zwei einander diametral gegenüberliegende Rastarme 20 aufweist, besitzt das Löseelement 30 natürlich ebenfalls zwei Betätigungsabschnitte 36 in entsprechender, ebenfalls diametral gegenüberliegender Anordnung.

Gemäß der Erfindung ist mit mindestens einem der Rastarme 20 im Bereich der an den freien Enden gebildeten Rastnocken 22 ein Schutzringelement 52 verbunden, welches sich derart in Umfangsrichtung und mit radialem Abstand zum Steckerschaft 6 erstreckt, daß die Bereiche der Rastnocken 22 seitlich abgedeckt sind (siehe insbesondere Fig. 1 und 3).

In einer nicht dargestellten Ausführungsform kann das Schutzringelement 52 als umfänglich durchgehender, geschlossener und - wegen der Radialbeweglichkeit der Rastarme 20 - elastisch verformbarer Ring ausgebildet sein. In der dargestellten, bevorzugten Ausführungsform ist allerdings das Schutzringelement 52 geschlitzt und hierdurch aus vorzugsweise zwei Ringabschnitten 54 bestehend ausgebildet. Dabei ist dann jeder Rastarm 20 mit einem der Ringabschnitte 54 verbunden, und zwar - bezüglich der Umfangserstrekkung des Ringabschnittes 54 -jeweils in dessen Mitte (s. Fig. 3). Dabei bildet dann jeder Rastarm 20 praktisch mit seinem den Rastnocken 22 aufweisenden Endbereich einen Teil des Schutzringelementes 52 bzw. des jeweiligen Ringabschnittes 54. In der bevorzugten Ausführungsform mit zwei Rastarmen 20 und daher auch zwei Ringabschnitten 54 des Schutzringelementes 52 erstreckt sich jeder der Ringabschnitte 54 in Umfangsrichtung über einen Winkelbereich von 160° bis nahezu 180°. Hierdurch werden die Bereiche der Rastnocken 22 optimal gegen Eindringen von Fremdkörpern von der Seite her, d.h. in Querrichtung zur Steckachse 12, geschützt, zumal das Schutzringelement 52 auch in axialer Richtung zumindest den gesamten Bereich der axialen Erstreckung der Rastnocken 22 überdeckt (Fig. 1).

Zweckmäßigerweise ist das Schutzringelement 52 bzw. sind die Ringabschnitte 54 einstückig an die Rastarme 20 angeformt. Dabei können die Rastarme 20 ebenfalls einstückig mit dem Steckerteil 2 bzw. dem Gehäuseabschnitt 10 ausgebildet sein, jedoch kann hier durchaus eine lösbare Verbindung vorgesehen sein. Beispielsweise können die Rastarme 20 über eine Clipverbindung am Gehäuseabschnitt 10 befestigt sein.

Der erfindungsgemäße Steckverbinder läßt sich sehr leicht stecken, wobei eine selbsttätige Verriegelung erfolgt. Des weiteren ist auch ein sehr einfaches Lösen möglich, und zwar über das spezielle, erfindungsgemäße Löseelement 30. Die radiale Spreizung der Rastarme 20 kann auch über die Ringabschnitte 54 des Schutzringelementes 52 bewirkt werden.

Es liegt auch im Rahmen der Erfindung, mehr als zwei Rastarme vorzusehen, diese können dann beispielsweise im Falle von drei Rastarmen zueinander um jeweils 120° versetzt angeordnet sein.

## Patentansprüche

1. Steckverbinder für Schlauch- und/oder Rohrleitungen, bestehend aus einem Steckerteil (2) mit einem in eine Stecköffnung (8) eines Aufnahmeteils (4) einsteckbaren und über Verriegelungsmittel lösbar arretierbaren Steckerschaft (6), wobei das Steckerteil (2) als Verriegelungsmittel mindestens zwei federelastische Rastarme (20) aufweist, die sich parallel zur Steckachse (12) jeweils mit Abstand zum Steckerschaft (6) in Richtung dessen freien Endes erstrecken und im eingesteckten Zustand mit Rastnocken (22) eine Raststufe (24) des Aufnahmeteils (4) arretierend hintergreifen, wobei die Rastarme (20) zum Lösen des Steckerteils (2) mittels eines Löseelementes (30) spreizbar sind, welches in Richtung der Steckachse (12) verschiebbar gehaltert ist und mit den Rastarmen (20) derart zusammenwirkt, dass die Rastarme (20) durch ein Verschieben des Löseelementes (30) in Herausziehrichtung (32) des Steckerteils (2) gespreizt werden, wobei
das Löseelement (30) am Steckerteil (2) axial verschiebbar angeordnet ist und mit jeweils einem Betätigungsabschnitt (36) zwischen den Steckerschaft (6) und jeden der Rastarme (20) in einem zwischen dem Rastnocken (22) und der mit dem Steckerteil (2) verbundenen Seite liegenden Bereich eingreift, wobei jeder Betätigungsabschnitt (36) über Schrägflächen (38, 40) mit dem zugehörigen Rastarm (20) zusammenwirkt, und dass mit mindestens einem der Rastarme (20) im Bereich der Rastnocken (22) ein Schutzringelement (52) verbunden ist, welches sich mit radialem Abstand zum Steckerschaft (6) derart in Umfangsrichtung erstreckt, dass der Bereich der Rastnocken (22) in Querrichtung weitgehend abgedeckt ist.

2. Steckverbinder nach Anspruch 1,
**dadurch gekennzeichnet, daß** das Schutzringelement (52) als an mindestens einer Stelle, insbesondere an mindestens zwei Umfangsstellen geschlitzter und so aus mindestens zwei Ringabschnitten (54) bestehender Ring ausgebildet ist, wobei vorzugsweise jeder Rastarm (20) mit einem der Ringabschnitte (54) und insbesondere in dessen Mitte verbunden ist.

3. Steckverbinder nach Anspruch 2,
**dadurch gekennzeichnet, daß** sich jeder Ringabschnitt (54) des Schutzringelementes (52) in Umfangsrichtung über einen Winkel von 160° bis 180° erstreckt.

4. Steckverbinder nach einem der Ansprüche 1 bis 3,
**dadurch gekennzeichnet, daß** das Schutzringelement (52) in axialer Richtung zumindest den gesamten Bereich der Rastnocken (22) überdeckt.

5. Steckverbinder nach einem der Ansprüche 1 bis 4,
**dadurch gekennzeichnet, daß** das Schutzringelement (52) bzw. die Ringabschnitte (54) einstückig an die Rastarme (20) angeformt ist/sind.

6. Steckverbindung nach einem der Ansprüche 1 bis 5,
**dadurch gekennzeichnet, daß** das Löseelement (30) derart an die Außenkontur des Stekkerteils (2) angepaßt, vorzugsweise in die Außenkontur integriert ist, daß es sich ohne vom Steckerteil (2) abstehende Teile an das Steckerteil (2) anschmiegt.

7. Steckverbinder nach einem der Ansprüche 1 bis 6,
**dadurch gekennzeichnet, daß** das Löseelement (30) in Steckerteil-Löserichtung (32) durch einen Endanschlag (42) in seiner Axialbewegung (34) begrenzt wird.

8. Steckverbinder nach einem der Ansprüche 1 bis 7,
**dadurch gekennzeichnet, daß** das Löseelement (30) in Steckerteit-Einsteckrichtung (44) durch einen Endanschlag (46) in seiner Axialbewegung begrenzt wird.

9. Steckverbinder nach einem der Ansprüche 1 bis 8, **dadurch gekennzeichnet, daß** das Löseelement (30) als federelastisches, klammerartiges, lösbar auf dem Steckerteil (2) aufgerastetes Clipelement (48) ausgebildet ist.

10. Steckverbinder nach einem der Ansprüche 1 bis 9, **dadurch gekennzeichnet, daß** das Löseelement (30) außenseitige Griffmulden (50) aufweist.

11. Steckverbinder nach einem der Ansprüche 1 bis 10,
**dadurch gekennzeichnet, daß** das Steckerteil (2) zwei einander diametral gegenüberliegende Rastarme (20) und das Löseelement (30) in entsprechender Anordnung zwei Betätigungsabschnitte (36) aufweisen.

## Claims

1. Plug-in connector for hose lines and/or pipelines comprising a plug part (2) with a plug shank (6) which can be inserted into a plug-in opening (8) of a receiving part (4) and can be releasably arrested by locking means, the plug part (2) having as locking means at least two resilient engaging arms (20) which extend parallel to the plugging axis (12) respectively at a distance from the plug shank (6) in the direction of the free end of the latter and, in the plugged-in state, engage with engaging lugs (22) in an arresting manner behind an engaging step (24) of the receiving part (4), the engaging arms (20) being spreadable for releasing the plug part (2) by means of a releasing element (30), which is secured displaceably in the direction of the plugging axis (12) and interacts with the engaging arms (20) in such a way that the engaging arms (20) are spread by a displacement of the releasing element (30) in the pulling-out direction (32) of the plug part (2), wherein the releasing element (30) is arranged to be axially displaceable on the plug part (2) and, by respective actuating portions (36), engages between the plug shank (6) and each of the engaging arms (20), in a region which is situated between the engaging lugs (22) and the end connected to the plug part (2), each actuating portion (36) interacting by means of sloping faces (38, 40) with the associated engaging arm (20) and in that there is connected to at least one of the engaging arms (20) in the region of the engaging lugs (22) a protective ring element (52), which extends at a radial distance from the plug shank (6) in the circumferential direction in such a way that the region of the engaging lugs (22) is largely covered in the transverse direction.

2. Plug-in connector according to Claim 1, **characterized in that** the protective ring element (52) is designed as a ring which is slit at at least one location, in particular at at least two circumferencial locations, and thus comprises at least two ring portions (54), each engaging arm (20) preferably being connected to one of the ring portions (54) and in particular in the centre of the latter.

3. Plug-in connector according to Claim 2, **characterized in that** each ring portion (54) of the protective ring element (52) extends in the circumferencial direction over an angle of 160° to 180°.

4. Plug-in connector according to one of Claims 1 to 3, **characterized in that** the protective ring element (52) covers over in the axial direction at least the entire region of the engaging lugs (22).

5. Plug-in connector according to one of Claims 1 to 4, **characterized in that** the protective ring element (52) or the ring portions (54) is/are integrally formed onto the engaging arms (20).

6. Plug-in connection [sic] according to one of Claims 1 to 5, **characterized in that** the releasing element (30) is adapted to the outer contour of the plug part (2), preferably is integrated into the outer contour, in such a way that it hugs the plug part (2), without any parts protruding from the plug part (2).

7. Plug-in connector according to one of Claims 1 to 6, **characterized in that** the releasing element (30) is limited in its axial movement (34) in the plug-part releasing direction (32) by an end stop (42).

8. Plug-in connector according to one of Claims 1 to 7, **characterized in that** the releasing element (30) is limited in its axial movement in the plug-part inserting direction (44) by an end stop (46).

9. Plug-in connector according to one of Claims 1 to 8, **characterized in that** the releasing element (30) is designed as a resilient, clasp-like clip element (48), which is releasably clipped onto the plug part (2).

10. Plug-in connector according to one of Claims 1 to 9, **characterized in that** the releasing element (30) has external recessed grips (50).

11. Plug-in connector according to one of Claims 1 to 10, **characterized in that** the plug part (2) has two diametrically opposed engaging arms (20) and the releasing element (30) has two actuating portions (36) in a corresponding arrangement.

## Revendications

1. Raccord enfichable pour tuyauteries souples et/ou rigides, constitué d'une partie mâle (2) comportant une tige (6) enfichable dans une ouverture d'enfichage (8) d'une partie femelle (4) et pouvant être bloquée, de manière amovible, par des moyens de verrouillage, la partie mâle (2) présentant, pour servir de moyens de verrouillage, au moins deux bras d'encliquetage (20) élastiques qui s'étendent parallèlement à l'axe d'enfichage (12), respectivement à une certaine distance de la tige mâle (6) en direction de son extrémité libre et qui, à l'état enfiché, s'encliquettent par des ergots (22) sur un épaulement (24) de la partie femelle (4), les bras d'encliquetage (20) pouvant se dilater pour desserrer la partie mâle (2) au moyen d'un élément de desserrage (30) qui est maintenu de manière à pouvoir coulisser en direction de l'axe d'enfichage (12) et qui coopère avec les bras (20) de telle manière que lesdits bras (20) se dilatent, par le coulissement de l'élément de desserrage (30) dans la direction d'extraction (32) de la partie mâle (2), dans lequel l'élément de desserrage (30) est disposé de façon à pouvoir coulisser axialement sur la partie mâle (2) et s'engage à chaque fois avec un segment d'actionnement (36) entre la tige (6) et chacun des bras d'encliquetage (20), dans une zone située entre les ergots (22) et le côté relié à la partie mâle (2), chaque segment d'actionnement (36) coopérant avec le bras d'encliquetage (20) correspondant par l'intermédiaire de surfaces obliques (38, 40) et un élément annulaire de protection (52) est relié avec au moins l'un des bras (20) dans la région des ergots (22), l'élément annulaire (52) s'étendant à une certaine distance radiale par rapport à la tige (6) en direction périphérique, de telle manière que la région des ergots (22) est largement recouverte dans le sens transversal.

2. Raccord enfichable selon la revendication 1,
**caractérisé en ce que** l'élément annulaire de protection (52) est réalisé en forme d'une bague fendue en au moins un point, notamment en au moins deux points de son pourtour, et donc constituée par au moins deux sections annulaires (54), tandis que de préférence chaque bras (20) est relié à l'une des sections annulaires (54) et notamment en son centre.

3. Raccord enfichable selon la revendication 2,
**caractérisé en ce que** chaque section annulaire (54) de l'élément annulaire de protection (52) s'étend, dans la direction de son pourtour sur un angle de 160 à 180°.

4. Raccord enfichable selon l'une des revendications 1 à 3, **caractérisé en ce que** l'élément annulaire de protection (52) recouvre en direction axiale au moins la région totale des ergots (22).

5. Raccord enfichable selon l'une des revendications 1 à 4, **caractérisé en ce que** l'élément annulaire (52), ou les sections annulaires (54), est (sont) intégré(s) par moulage aux bras (20).

6. Raccord enfichable selon l'une des revendications 1 à 5,
**caractérisé en ce que** l'élément de desserrage (30) est ajusté sur le contour extérieur de la partie mâle (2), de préférence intégré dans ce contour extérieur, de telle manière qu'il vient épouser la forme de ladite partie mâle (2) sans qu'aucune de ses parties ne dépasse de ladite partie mâle (2).

7. Raccord enfichable selon l'une des revendications 1 à 6, **caractérisé en ce que** l'élément de desserrage (30) est limité dans son mouvement axial (34) en direction du desserrage (32) de la partie mâle, par une butée finale (42).

8. Raccord enfichable selon l'une des revendications 1 à 7, **caractérisé en ce que** l'élément de desserrage (30) est limité dans son mouvement axial dans le sens de pénétration (44) de la partie enfichable par une butée finale (46).

9. Raccord enfichable selon l'une des revendications 1 à 8, **caractérisé en ce que** l'élément de desserrage (30) est réalisé sous la forme d'un circlip (48) élastique, du type agrafe, encliqueté de manière amovible sur la partie mâle (2).

10. Raccord enfichable selon l'une des revendications 1 à 9, **caractérisé en ce que** l'élément de desserrage (30) présente sur son côté extérieur des moulures de préhension (50).

11. Raccord enfichable selon l'une des revendications 1 à 10, **caractérisé en ce que** la partie mâle (2) présente deux bras encliquetables (20) diamétralement opposés l'un à l'autre, et **en ce que** l'élément de desserrage (30) présente deux sections de manoeuvre (36) disposées de manière correspondante.
